**Europäisches Patentamt**

**European Patent Office**

**Office européen des brevets**

(19)

(11) Publication number : **0 514 200 A2**

(12)

# EUROPEAN PATENT APPLICATION

(21) Application number : **92304425.9**

(22) Date of filing : **15.05.92**

(51) Int. Cl.⁵ : **H04B 1/40**

(30) Priority : **17.05.91 JP 113455/91**

(43) Date of publication of application :
**19.11.92 Bulletin 92/47**

(84) Designated Contracting States :
**DE ES FR GB IT SE**

(71) Applicant : **NEC CORPORATION**
**7-1, Shiba 5-chome Minato-ku**
**Tokyo 108-01 (JP)**

(72) Inventor : **Hashimoto, Kazuya, c/o NEC**
**Corporation**
**7-1, Shiba 5-chome**
**Minato-ku, Tokyo 108-01 (JP)**

(74) Representative : **Abnett, Richard Charles et al**
**REDDIE & GROSE 16 Theobalds Road**
**London WC1X 8PL (GB)**

(54) **TDMA radio communication apparatus.**

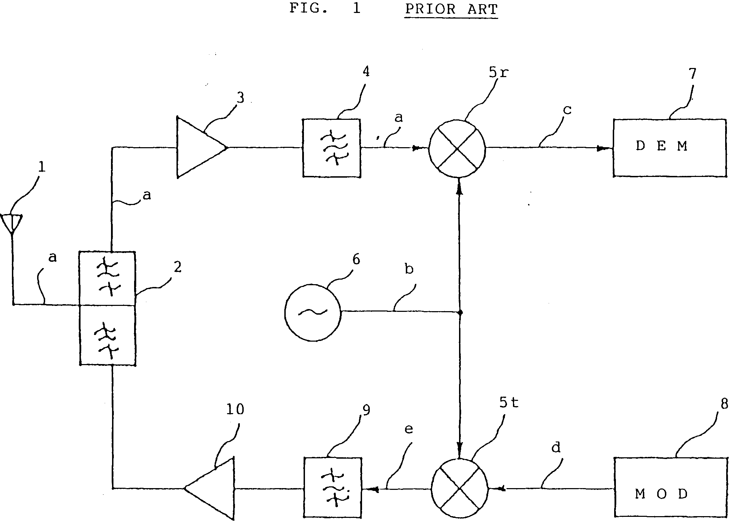

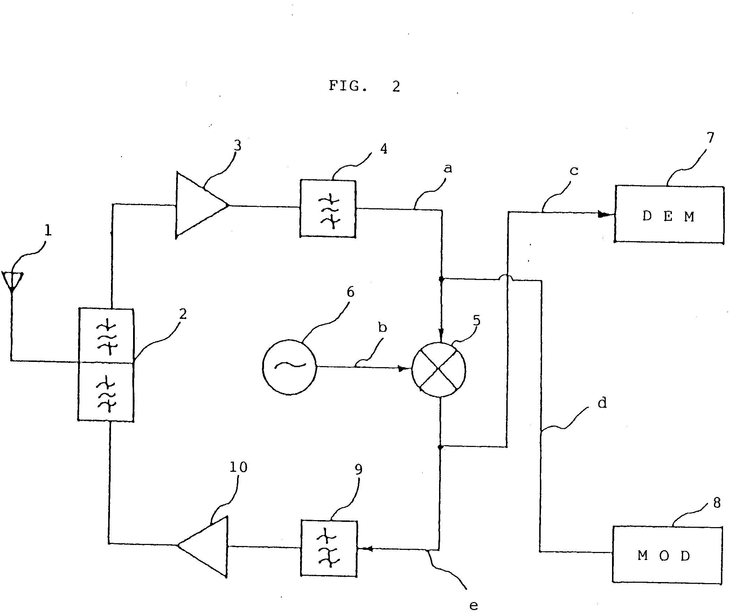

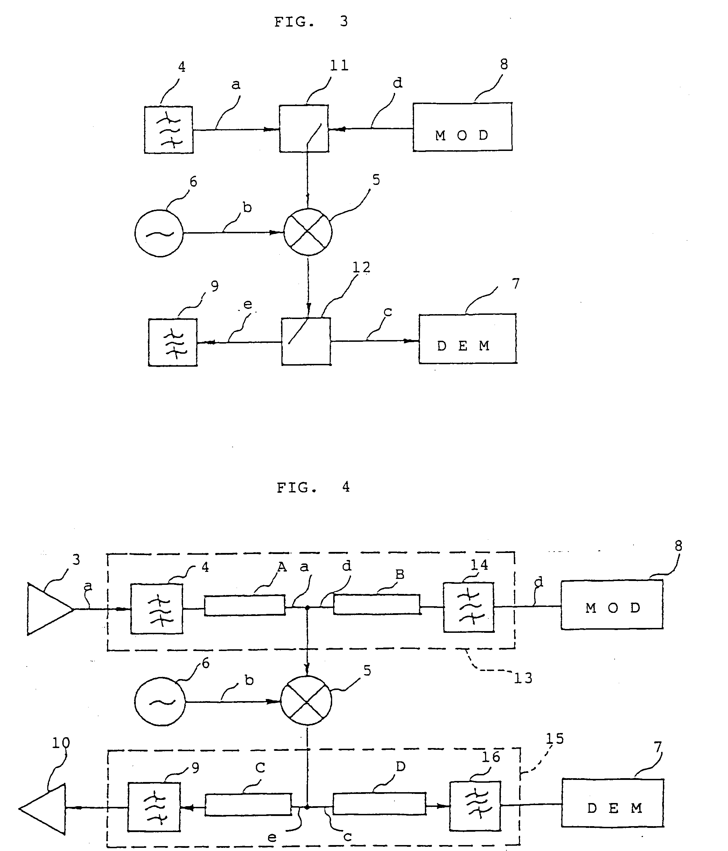

(57)    A TDMA (Time Division Multiple Access) radio communication apparatus has a receive frequency mixer and a transmit frequency mixer constituted by a single frequency mixer (5). Signal selecting means is connected to each of the input and output of the single frequency mixer for separating a high frequency signal and an intermediate frequency (IF) signal, and may be constituted by switches (11,12 ; Fig.3) or filters (4,9,14,16 ; Fig.4) and strip lines (A-D). When a received high frequency signal is fed from a receive high frequency filter (4) to the mixer, the resulting IF signal from the mixer is delivered to a demodulator (7). When an IF signal to be transmitted is fed from a modulator (8) to the mixer, the resulting high frequency signal from the mixer is applied to a transmit high frequency filter (9). The received IF signal and the IF signal to be transmitted are prevented from leaking into the modulator and the demodulator, respectively.

FIG. 2

BACKGROUND OF THE INVENTION

The present invention relates to a TDMA (Time Division Multiple Access) radio communication apparatus and, more particularly, to a TDMA radio communication apparatus which promotes the efficient use of constituent parts and thereby enhances a miniature, inexpensive and reliable construction.

It has been customary with a TDMA radio communication apparatus to assign an exclusive mixer to each of a reception line and a transmission line thereof, so that the mixers may mix frequencies independently of each other. A prerequisite is, therefore, to match the operating characteristics of the mixers so as to insure high communication quality. This results in the need for extra work for adjustment and requires the apparatus to be arranged with consideration given to a space for such adjustment. Moreover, the transmission line stops processing signals in the event of reception, and the reception line stops processing signals in the event of transmission, i.e. , only one of the mixers which are expensive can operate at a time. For these reasons, it has been difficult to reduce the overall size and cost of the apparatus.

SUMMARY OF THE INVENTION

It is therefore an object of the present invention to provide a TDMA radio communication apparatus which eliminates wastes in operation and construction, reduces the overall size and cost, and insures high communication quality.

In accordance with the present invention, a TDMA radio communication apparatus comprises a single frequency mixer having a function of a receive mixer for mixing a received high frequency signal with a local signal to produce a received intermediate frequency (IF) signal, and a function of a transmit mixer for mixing an IF signal to be transmitted with the local signal to produce a high frequency signal to be transmitted, and a signal selecting device connected to at least one of the input and output of the single frequency mixer for selecting a high frequency signal or an IF signal to thereby prevent the high frequency signal and IF signal from being mixed with each other at the input or the output of the single frequency mixer.

BRIEF DESCRIPTION OF THE DRAWINGS

The above and other objects, features and advantages of the present invention will become more apparent from the following detailed description taken with the accompanying drawings in which:
FIG. 1 is a block diagram schematically showing a conventional TDMA radio communication apparatus;
FIG. 2 is a block diagram schematically showing a TDMA radio communication apparatus embodying the present invention;
FIG. 3 is a schematic block diagram representative of a specific construction of signal selecting means included in the embodiment; and
FIG. 4 is a schematic block diagram showing another specific construction of the signal selecting means.

DESCRIPTION OF THE PREFERRED EMBODIMENT

To better understand the present invention, a brief reference will be made to a prior art TDMA radio communication apparatus, shown in FIG. 1. As shown, the TDMA radio communication apparatus has an antenna 1, an antenna duplexer 2, a receive amplifier 3, a receive high frequency filter (band pass filter) 4, a receive frequency mixer 5r, a local oscillator 6, a demodulator (DEM) 7, a modulator 9 (MOD) 8, a transmit frequency mixer 5t, a transmit high frequency filter (band pass filter) 9, and a transmit amplifier 10.

In operation, a high frequency signal a coming in through the antenna 1 is routed through the duplexer 2 to the receiver amplifier 3 to be amplifier to a predetermined level. The amplified signal from the amplifier 3 is fed to the receive frequency mixer 5r via the receive high frequency filter 4. The mixer 5r mixes the frequency of the signal a from the filter 4 with the frequency of a local signal b from the local oscillator 6, thereby producing a received intermediate frequency (IF) signal c. The received IF signal c is applied to the DEM 7. On the other hand, an IF signal or demodulated signal d to be transmitted is fed from the MOD 8 to the transmit frequency mixer 5t. The mixer 5t mixes the frequency of the IF signal d with the frequency of the local signal b to thereby produce a high frequency signal e to be transmitted. The high frequency signal e is amplified by the transmit amplifier 10 and then radiated from the antenna 1 via the duplexer 2.

As stated above, the conventional TDMA radio communication apparatus assigns an exclusive mixer 5r or 5t to each of the reception line and transmission line and causes them to mix frequencies independently of each other. The prerequisite is, therefore, to match the operating characteristics of the mixers 5r and 5t so as to insure high communication quality. This results in the need for extra work for adjustment and requires the apparatus to be arranged with consideration given to a space for such adjustment. Moreover, the transmission line stops processing signals in the event of reception while the reception line stops processing signals in the event of transmission, i.e. , only one of the mixers 5r and 5t which are expensive can operate at a time. For these reasons, it has been difficult to reduce the overall size and cost of the apparatus.

Referring to FIG. 2, a TDMA radio communication apparatus embodying the present invention is shown. Since the illustrative embodiment is an improved version of the conventional apparatus discussed above with reference to FIG. 1, the same constituent parts are designated by the same reference numerals, and redundant description will be avoided for simplicity. As shown, the embodiment is characterized in that a single frequency mixer 5 is interposed between a receive high frequency filter 4 and a transmit high frequency filter 9 and connected to a local oscillator 6, and in that signal selecting means is connected to each of the input and output of the mixer 5 for selecting either of a high frequency signal and an IF signal. Specifically, the signal selecting means are constructed such that when a received high frequency signal $a$ is applied from the receive high frequency filter to the frequency mixer 5, the resulting received IF signal $c$ from the mixer 5 is delivered to the DEM 7 while, when an IF signal to be transmitted $d$ is fed from a MOD 8 to the mixer 5, the resulting high frequency signal $e$ from the mixer 5 is delivered to the transmit high frequency filter 9. This is successful in preventing the high frequency signal and IF signal from being mixed together at the input or the output of the mixer 5.

FIG. 3 shows a specific construction of the signal selecting means. As shown, an input switch 11 has one stationary contact thereof connected to the receive filter 4 and the other stationary contact connected to the MOD 8. An output switch 12 has one stationary contact thereof connected to the transmit filter 9 and the other stationary contact connected to the DEM 7. Under the control of a control circuit, not shown, the output switch 12, for example, selects the transmit filter 9 when the input switch 11 selects the MOD 8 or selects the DEM 7 when the input switch 11 selects the receive filter 4. In such a configuration, during reception, the received high frequency signal $a$ from the receive filter 4 is converted to a received IF signal $c$ by the frequency mixer 5 and then fed to the DEM 7 while being preventing from leaking into the MOD 8. Likewise, during transmission, an IF signal $d$ from the MOD 8 is converted to a high frequency signal $e$ to be transmitted by the frequency mixer 5 and then applied to the transmit filter 9 while being prevented from leaking into the DEM 7.

With the above construction, the embodiment uses a single frequency mixer 5 for both of signal transmission and signal reception on a time division basis, thereby saving expensive constituent parts and enhancing reliability due to the decrease in the number of pars. The embodiment insures high communication quality at all times since matching the operating characteristics of two mixers, as has been customary, is not necessary. In addition, an extra space for such adjustment is needless, so that a miniature apparatus is achievable.

FIG. 4 shows another specific construction of the signal selecting means which is implemented by a first and a second transmission/reception circuit 13 and 15 connected to the input and the output of the mixer 5, respectively. The transmission/reception circuit 13 has the receive high frequency filter 4 and a first strip line A passing only the received high frequency signal $a$ from the receive amplifier 3, and an IF filter 14 and a second strip line B passing only the IF signal $d$ to be transmitted from the MOD 8. The output signals $a$ and $b$ of the strip lines A and B, respectively, are applied to the input of the frequency mixer 5. The other transmission/reception circuit 13 has a third strip line C and a transmit filter 9 passing only a high frequency signal, and a fourth strip line D and a transmit IF filter 16 passing only an IF signal. This circuit 15 delivers the high frequency signal $e$ to be transmitted and the received IF signal, which are applied from the output of the frequency mixer 5 to the strip lines C and D, to the transmit amplifier 10 and the DEM, respectively. The circuitry shown in FIG. 4 separates the reception line and the transmission line and achieves the same advantages as the construction of FIG. 3 without resorting to switches or the control circuit.

The embodiment has been shown and described as connecting signal selecting means to each of the input and output of the mixer 5. Alternatively, in a construction wherein constituent parts included in a transmission line for processing signals do not operate while a reception line is in operation, one of the two signal selecting means may be omitted to further simplify the construction.

In summary, it will be seen that the present invention provides a TDMA radio communication apparatus which eliminates wastes in operation and construction, implements a miniature and inexpensive construction, and insures high communication quality.

Various modifications will become possible for those skilled in the art after receiving the teachings of the present disclosure without departing from the scope thereof.

## Claims

1. A TDMA (Time Division Multiple Access) radio communication apparatus comprising:

a single frequency mixer having a function of a receive mixer for mixing a received high frequency signal with a local signal to produce a received intermediate frequency (IF) signal, and a function of a transmit mixer for mixing an IF signal to be transmitted with said local signal to produce a high frequency signal to be transmitted; and

signal selecting means connected to at least one of an input and an output of said single frequency mixer for selecting a high frequency signal or an IF signal to thereby prevent said high frequency signal and said IF signal from being mixed with each other at said input or said output of said frequency mixer.

2. An apparatus as claimed in claim 1, wherein said signal selecting means is connected to either of the input and the output of said single frequency mixer.

3. An apparatus as claimed in claim 2, wherein said signal selecting means comprises a transmission/reception circuit comprising a high frequency filter passing only the high frequency signal and an IF filter passing only the IF signal.

4. An apparatus as claimed in claim 1, wherein said signal selecting means comprises a transmission/reception circuit comprising a high frequency filter passing only the ,high frequency signal and an IF filter passing only the IF signal.

FIG. 1   PRIOR ART

FIG. 2

EP 0 514 200 A2

FIG. 3

FIG. 4